# EUROPÄISCHE PATENTANMELDUNG

(11) **EP 3 771 561 A1**
(43) Veröffentlichungstag der Anmeldung: **03.02.2021**
(21) Anmeldenummer: 19189206.6
(22) Anmeldetag: 30.07.2019
(51) Int. Cl.: B33Y 80/00, B23D 77/02, B23B 51/00, B23B 29/03, B23C 5/00

(54) **AUFBOHRWERKZEUG**

(71) Anmelder: KOMET Deutschland GmbH, 74354 Besigheim (DE)
(72) Erfinder: SCHMID, Frank, 74354 Besigheim (DE); EDELMANN, Karl-Heinz, 74354 Besigheim (DE)
(74) Vertreter: Ciesla, Dirk

(57) **Zusammenfassung**

Um ein Aufbohrwerkzeug (1) zur zumindest abschnittsweisen Aufweitung einer Ausnehmung eines metallischen Werkstücks durch eine Drehung um eine Längsachse (2) in einem vorgegebenen Bearbeitungsdrehsinn (3), umfassend eine ein- oder mehrteilige Außenwandung (4) und mehrere in einer ein- oder mehrteiligen Aufnahmestruktur (5) der Außenwandung (4) angeordnete Schneidelemente (200) bereitzustellen, welches die mechanischen Belastungen beim Aufbohren in verbesserter Weise reduziert, wird vorgeschlagen, dass eine Stabilisierungsstruktur (14, 16, 17, 18, 19, 20, 21, 22, 23, 25, 26, 27, 28) zur Hemmung einer Verformung der Außenwandung (4) derart ausgebildet ist, dass ein von der Außenwandung (4) zumindest abschnittsweise umfänglich umgebenes Kernstrukturelement (14, 25, 26, 27, 28) der Stabilisierungsstruktur (14, 16, 17, 18, 19, 20, 21, 22, 23, 25, 26, 27, 28) von der Außenwandung (4) beabstandet ist, in einem zwischen dem Kernstrukturelement (14, 25, 26, 27, 28) und der Außenwandung (4) gebildeten Zwischenraum (4b) eine Verbindungsstruktur (16, 17, 18, 19, 20, 21, 22, 23) der Stabilisierungsstruktur (14, 16, 17, 18, 19, 20, 21, 22, 23, 25, 26, 27, 28) ausgebildet ist, der Zwischenraum (4b) durch die Verbindungsstruktur (16, 17, 18, 19, 20, 21, 22, 23) in einen stabilisierungsstrukturfreien Bereich und einen stabilisierungsstrukturhaltigen Bereich (16, 17, 18, 19, 20, 21, 22, 23, 25, 26, 27, 28) unterteilt ist und die Verbindungsstruktur (16, 17, 18, 19, 20, 21, 22, 23) mit der Außenwandung (4) und dem Kernstrukturelement (14, 25, 26, 27, 28) jeweils materialnahtlos monolithisch verbunden ist.

## Beschreibung

Die vorliegende Erfindung betrifft ein Aufbohrwerkzeug zur zumindest abschnittsweisen Aufweitung einer Ausnehmung eines metallischen Werkstücks durch eine Drehung um eine Längsachse in einem vorgegebenen Bearbeitungsdrehsinn, umfassend eine ein- oder mehrteilige Außenwandung und mehrere in einer ein- oder mehrteiligen Aufnahmestruktur der Außenwandung angeordnete Schneidelemente.

Ein Aufbohrwerkzeug der eingangs genannten Art, welches auch als Feinbohrwerkzeug bezeichnet werden kann, wird üblicherweise dazu verwendet, eine Ausnehmung, insbesondere in Form einer Bohrung eines metallischen Gehäuses eines Elektromotors, spanabhebend zu bearbeiten, um dadurch in der Ausnehmung Bohrungen zur Aufnahme einer Lagerung für ein Wellenelement, insbesondere im Falle des Elektromotors einen Rotor, sowie Bohrungen zur Aufnahme weiterer Elemente, insbesondere im Falle des Rotors Lagerungen für diesen, zu realisieren. Dabei ist es wichtig, dass die inneren Abmessungen der Bohrungen vorgegebenen Toleranzen entsprechen. Dies insbesondere dann, wenn die Bohrungen in dem Gehäuse des Elektromotors realisiert werden sollen, weil sich der Rotor üblicherweise mit relativ hohen Drehzahlen in der Ausnehmung dreht, so dass bei zu großen Abweichungen die Bohrungen zum Beispiel nicht miteinander fluchtend sind, was zum Auftreten unerwünschter dynamischer Kräfte führt. Folglich muss die Ausnehmung durch das Aufbohrwerkzeug präzise bearbeitet werden. Damit die spanabhebende Bearbeitung mit dem Aufbohrwerkzeug zugleich wirtschaftlich ist, muss das Aufbohrwerkzeug um die Längsachse mit einer relativ großen Drehzahl in dem Bearbeitungsdrehsinn um die Längsachse gedreht werden, um so möglichst viele Gehäuse oder dergleichen in relativ kurzer Zeit bearbeiten zu können.

Angesichts dieser Faktoren ist es außerdem wichtig, dass das Aufbohrwerkzeug hinsichtlich einer Verformung, zum Beispiel einer Verwindung, der Außenwandung, also dort wo die Schneidelemente angeordnet sind, möglichst stabil und insgesamt gewichtssparend ausgelegt ist. Letzteres ist für eine Reduzierung dynamischer Kräfte und damit der Realisierung hoher Drehzahlen des Aufbohrwerkzeugs relevant.

Ein solches Werkzeug ist aus der WO 2018 / 002165 A1 bekannt. Bei diesem Werkzeug ist die Außenwandung in Form eines hohlzylindrischen Schneidenträgers ausgebildet, wobei der Schneidenträger über eine Fügestelle mit einem Grundkörper durch eine Schweißverbindung verbunden ist.

An dem bekannten Aufbohrwerkzeug ist jedoch nachteilhaft, dass es relativ schwer ist, so dass beim Aufbohren dementsprechend große Kippmomente und Spindelbelastungen herrschen.

Aufgabe der vorliegenden Erfindung ist daher, ein Aufbohrwerkzeug der eingangs genannten Art bereitzustellen, welches die mechanischen Belastungen beim Aufbohren in verbesserter Weise reduziert.

Diese Aufgabe wird durch ein Aufbohrwerkzeug nach Anspruch 1 gelöst. Vorteilhafte Weiterbildungen sind in den davon abhängigen Ansprüchen angegeben.

Das Aufbohrwerkzeug zur zumindest abschnittsweisen Aufweitung einer Ausnehmung eines metallischen Werkstücks durch eine Drehung um eine Längsachse in einem vorgegebenen Bearbeitungsdrehsinn umfasst eine ein- oder mehrteilige Außenwandung und mehrere in einer ein- oder mehrteiligen Aufnahmestruktur der Außenwandung angeordnete Schneidelemente, wobei eine Stabilisierungsstruktur zur Hemmung einer Verformung der Außenwandung derart ausgebildet ist, dass ein von der Außenwandung zumindest abschnittsweise umfänglich umgebenes Kernstrukturelement der Stabilisierungsstruktur von der Außenwandung beabstandet ist, in einem zwischen dem Kernstrukturelement und der Außenwandung gebildeten Zwischenraum eine Verbindungsstruktur der Stabilisierungsstruktur ausgebildet ist, der Zwischenraum durch die Verbindungsstruktur in einen stabilisierungsstrukturfreien Bereich und einen stabilisierungsstrukturhaltigen Bereich unterteilt ist und die Verbindungsstruktur mit der Außenwandung und dem Kernstrukturelement jeweils materialnahtlos monolithisch verbunden ist.

Dadurch wird in vorteilhafterweise eine Verformung der Außenwandung auf die Stabilisierungsstruktur übertragen, so dass dementsprechend Verformungsenergie im Bereich der Stabilisierungsstruktur dissipiert wird. Der stabilisierungsstrukturfreie Bereich trägt dabei zur Gewichtsreduktion bei. Der stabilisierungsstrukturhaltige Bereich dient hingegen der Stabilisierung der Außenwandung und gleicht auf diese Weise eine durch den stabilisierungsstrukturfreien Bereich gedingte Abschwächung der Formstabilität der Außenwandung teilweise aus. Der stabilisierungsstrukturhaltige Bereich ist dabei vorzugsweise als Wandung, welche auch mehrteilig, zum Beispiel in Form mehrerer Wandungen, ausgebildet sein kann, insbesondere einer oder mehrerer Wandungen, die entlang einer Schraubenlinie mit einer der Längsachse entsprechenden Schraubenachse entlang der Längsachse erstreckend ausgeformt sein können, ausgebildet, weil dies besonders gewichtssparend und zugleich zur Hemmung einer Torsionsverformung der Auswandung geeignet ist. Letzterer Aspekt wird noch mehr verbessert, indem die Schraubenlinie dem Bearbeitungsdrehsinn entgegengesetzt gewunden ist.

Mit der Längsachse ist im Sinne der vorliegenden Offenbarung eine Längsachse im geometrischen Sinne gemeint, um welche das Aufbohrwerkzeug bestimmungsgemäß gedreht werden kann. Vorzugsweise ist eine parallel zur Längsachse bemessene äußere Abmessung des Aufbohrwerkzeugs größer als eine quer zur Längsachse bemessene äußere Abmessung des Aufbohrwerkzeugs.

Mit dem Bearbeitungsdrehsinn ist im Sinne der vorliegenden Offenbarung insbesondere der Drehsinn des Aufbohrwerkzeugs gemeint, der im Vergleich zu einem entgegengesetzten Drehsinn um die Längsachse zu einem größeren Zerspanungsvolumen bei einem Eingriff der Schneidelemente in das Werkstück führt. Vorzugsweise weist die Aufnahmestruktur mindestens eine Anlagefläche für eines der Schneideelemente derart auf, dass durch eine tangentiale Vektorkomponente eines der Anlagefläche zuordenbaren sowie in eine aufnahmestrukturfreie Umgebung orientierten Normalenvektors der Bearbeitungsdrehsinn definiert ist. Auf diese Weise wird zudem das Schneidelement durch die Anlagenfläche unter Einwirkung einer Schnittkraft im Sinne eines Widerlagers abgestützt. Die auf die Schneidelemente jeweils wirkende Schnittkraft ist üblicherweise zumindest komponentenweise dem Bearbeitungsdrehsinn entgegengesetzt orientiert.

Indem die Außenwandung auch mehrteilig ausgebildet sein kann, kann die Außenwandung insbesondere in eine Umfangsrichtung des Aufbohrwerkzeugs unterbrochen ausgebildet sein.

Indem die Aufnahmestruktur auch mehrteilig ausgebildet sein kann, können insbesondere einzelne als strukturelle Erhebungen der Außenwandung ausgebildete Plattensitze oder Kassettensitze zur Aufnahme jeweils eines der Schneidelemente ausgebildet sein.

Vorzugsweise ist die Aufnahmestruktur mit der Außenwandung materialnahtlos monolithisch verbunden.

Die Schneidelemente sind in der Aufnahmestruktur vorzugsweise derart angeordnet, dass eine Relativbewegung zwischen den Schneidelementen und der Außenwandung gesperrt ist und die Schneidelemente zur zerspanenden Materialabtragung orientiert sind.

Indem das Kernstrukturelement der Außenwandung beabstandet und von der Außenwandung zumindest abschnittsweise umfänglich umgeben ist, wird unter Beibehaltung vorgegebener äußerer Abmessungen der Zwischenraum zwischen dem Kernstrukturelement und der Außenwandung geschaffen, was durch eine entsprechende Reduzierung des durch das Kernstrukturelement bedingten Materials Gewicht einspart. In vorteilhafterweise wird die damit verminderte Hemmung gegen eine Verformung der Außenwandung, insbesondere eine Torsion dieser, dadurch ausgeglichen oder zumindest teilweise kompensiert, dass die Verbindungsstruktur mit dem Kernstrukturelement zur Erhöhung des Flächenträgheitsmoments, insbesondere des polaren Flächenträgheitsmoments, des Aufbohrwerkzeugs zusammenwirkt. Dabei wird der Zwischenraum in den stabilisierungsstrukturhaltigen Bereich, also der Bereich, der durch das Material, zum Beispiel Metall, insbesondere Stahl, der Stabilisierungsstruktur und damit durch diese gebildet ist und somit die Stabilisierungsstruktur aufweist und den Verformungskräften zusammen mit dem Kernstrukturelement entgegenwirkt, und dem gewichtssparenden stabilisierungsstrukturfreien Bereich, welcher zum Beispiel mit einer gasförmigen Umgebung des Aufbohrwerkzeugs kommunizierend verbunden ist, zum Beispiel im Bereich einer Stirnseite des Aufbohrwerkzeugs, unterteilt. Durch eine solchermaßen realisierte Bauweise wird eine an die Verformungsart, zum Beispiel eine Torsion der Auswandung aufgrund der durch die Schneideelemente bei einem Eingriff in das metallische Werkstück hervorgerufenen Schnittkräfte, zumindest teilweise angepasste Stabilisierungsstruktur, insbesondere im Bereich der Verbindungsstruktur, bereitgestellt. Danach ist es besonders bevorzugt, wenn die Verbindungsstruktur zum Beispiel durch eine oder mehrere Wandungen, welche die Außenwandung und das Kernstrukturelement materialnahtlos monolithisch verbinden, gebildet ist. Durch diese Wandungen, einschließlich einer einzelnen Wandung, kann zum Beispiel eine Wabenstruktur, welche einzelne Kammer umfasst, durch welche der stabilisierungsstrukturfreie Bereich im Wabeninneren gebildet wird, bereitgestellt werden. Wandungen, einschließlich einer einzelnen Wandung, der Stabilisierungsstruktur, insbesondere im Bereich der Verbindungsstruktur, können auch entlang einer Schraubenlinie mit einer der Längsachse entsprechenden Schraubenachse ausgeformt sein, wobei der stabilisierungsstrukturhaltige Bereich der Wandung entspricht und der außerhalb der Wandung befindliche Bereich dem stabilisierungsstrukturfreien Bereich entspricht. Alternativ oder ergänzend ist es vorteilhaft, wenn die Verbindungsstruktur durch fachwerkartig miteinander verbundene Trägerelemente, zum Beispiel Stäbe runden oder polygonalen, insbesondere rechteckigen oder quadratischen, Querschnitts, gebildet ist, mit Knotenbereichen, in denen die Trägerelemente starr miteinander materialnahtlos monolithisch verbunden sind.

Mit einer materialnahtlosen monolithischen Verbindung ist im Sinne der vorliegenden Offenbarung insbesondere gemeint, dass ein Übergangsbereich, dem eine materialnahtlose monolithische Verbindung zugeordnet wird oder ist, zwischen einem ersten Bereich, zum Beispiel einem Bereich der Verbindungsstruktur, und einem zweiten Bereich, zum Beispiel einem Bereich der Außenwandung oder des Kernstrukturelements, des Aufbohrwerkzeugs im Wesentlichen mikrostrukturell und chemisch dem Übergangsbereich benachbarten Teilbereichen des ersten Bereichs und zweiten Bereichs identisch ist, zum Beispiel wenn dies in einem Schnitt durch das Aufbohrwerkzeug senkrecht zur Längsachse oder dementsprechend jeweils schichtweise betrachtet wird. So ist eine materialnahtlose monolithische Verbindung dadurch gekennzeichnet, zum Beispiel wenn dies in einem Schnitt durch das Aufbohrwerkzeug senkrecht zur Längsachse oder dementsprechend jeweils schichtweise betrachtet wird, dass die Korngröße, die kristallographische Textur, einschließlich einer isotropen kristallographischen Textur, und die Zusammensetzung im Übergangsbereich und den Teilbereichen im Wesentlichen identisch ist und jedenfalls aufgrund der materialnahtlosen monolithischen Verbindung kein Gradient bezüglich der Mikrostruktur und der Zusammensetzung gebildet ist. Damit ist eine materialnahtlose monolithische Verbindung insbesondere als Abgrenzung zu einer Lötverbindung, einer Klebeverbindung, einer formschlüssigen Verbindung, einer kraftschlüssigen Verbindung und Kombinationen daraus zu verstehen. Ferner ist eine materialnahtlose monolithische Verbindung in Abgrenzung zu einer Schweißverbindung zu verstehen, durch welche zwei Bauteile mit struktureller Integrität miteinander verbunden sind.

Eine materialnahtlose monolithische Verbindung ist insbesondere dadurch erhältlich, dass ein pulverförmiges Material (Ausgangspulver), aus welchem das Aufbohrwerkzeug zum Beispiel im Bereich der Außenwandung, des Kernstrukturelements und der Stabilisierungsstruktur, insbesondere ihrer Verbindungsstruktur, hergestellt wird, entsprechend einer gewünschten Geometrie aufgeschmolzen wird und anschließend durch Abkühlung erstarrt. Hierfür ist selektives Laserschmelzen des Ausgangspulvers besonders gut geeignet.

Gemäß einer Weiterbildung des Aufbohrwerkzeugs weist die Verbindungsstruktur eine ein- oder mehrteilige erste Verbindungswandung auf und ist die erste Verbindungswandung mit dem Kernstrukturelement und der Außenwandung jeweils materialnahtlos monolithisch verbunden. Dadurch, dass die Verbindungsstruktur die erste Verbindungswandung aufweist, wird eine besonders materialsparende und zugleich stabile Stabilisierungsstruktur in dem Zwischenraum bereitgestellt, so dass sich die Außenwandung über die erste Verbindungswandung gegen das Kernstrukturelement abstützt und umgekehrt. Die erste Verbindungswandung kann dabei eine konstante oder variierende Wandstärke aufweisen. Vorzugsweise ist die Wandstärke der ersten Verbindungswandung kleiner als eine Wandstärke der Außenwandung im Bereich der Verbindungsstruktur. Vorzugsweise sind die Wandstärken dabei jeweils in eine Normalenvektorrichtung zu einer jeweiligen Oberfläche der ersten Verbindungswandung bzw. der Außenwandung bemessen. Zur weiteren Gewichtseinsparung weist die erste Verbindungswandung vorzugsweise mindestens eines Ausnehmung auf. Besonders bevorzugt ist es, wenn die erste Verbindungswandung mehrteilig ausgebildet ist, so dass diese zum Beispiel zwei, vier oder mehr Verbindungswandungsteile umfasst.

Gemäß einer Weiterbildung des Aufbohrwerkzeugs ist die erste Verbindungswandung entlang einer ersten Schraubenlinie mit einer der Längsachse entsprechenden Schraubenachse erstreckend ausgeformt. Dadurch, dass die Verbindungsstruktur die erste Verbindungswandung aufweist, wird die Außenwandung über die erste Verbindungswandung gegen das Kernstrukturelement noch besser abgestützt oder umgekehrt. Außerdem wird dadurch die Torsionssteifigkeit der Verbindungsstruktur und damit der Stabilisierungsstruktur und damit der Außenwandung noch weiter verbessert, weil sich die erste Verbindungswandung entweder in Richtung einer Torsionsspannung der Außenwandung oder dazu entgegensetzt erstreckt. Letzteres ist für das Zusammenwirken einer anderen sich in Richtung der Torsionsbelastung erstreckenden Verbindungswandung zur Stützung dieser relevant. Die erste Schraubenlinie kann dabei zum Beispiel in kartesischen Koordinaten mit einem Ursprung auf der Längsachse bereichsweise durch einen Vektor mit den Koordinaten r·cos(t) in x-Richtung, r·sin(t) in y-Richtung und h·t in z-Richtung beschrieben werden, wobei r, t und h reelle Zahlen sind und somit r ein Maß für den Radius, also den senkrecht zur Längsachse bemessenen Abstand eines Punkts der ersten Schraubenlinie ist, und b/a ein Maß für die Steigung der ersten Schraubenlinie und t eine Variable für einen vom Radius und einer quer zur Längsachse bemessenen Querachse eingeschlossenen Winkel ist. Die Werte von r und h können konstant sein oder bereichsweise, zum Beispiel in Umfangsrichtung und/oder Richtung der Längsachse, variieren. Mit mehrteilig ist dabei insbesondere gemeint, dass die erste Verbindungswandung mehrere drehsymmetrische Wandungen umfasst, wobei die Längsachse des Aufbohrwerkzeugs eine entsprechende Drehsymmetrieachse ist. Mit der ersten Schraubenlinie ist damit eine Mehrzahl um die Längsachse gedrehter Schraubenlinien gemeint, beispielsweise um 90° gedrehter Schraubenlinien, so dass die erste Verbindungswandung in diesem Falle mehrteilig ist, zum Beispiel vier drehsymmetrische Wandungen umfasst, deren Erstreckung bis auf eine Drehung um die Längsachse durch die, zum Beispiel konstanten oder bereichsweise variierenden, Parameter der ersten Schraubenlinie einer einteiligen ersten Verbindungswandung beschrieben werden können.

Gemäß einer Weiterbildung des Aufbohrwerkzeugs ist die erste Schraubenlinie dem Bearbeitungsdrehsinn entgegengesetzt gewunden. Dadurch wird die Außenwandung noch besser gegen die Verformung, insbesondere im Falle einer Torsionsverformung, durch die Stabilisierungsstruktur stabilisiert, denn üblicherweise treten die größten Torsionsspannungen in einer dem Bearbeitungsdrehsinn entgegensetzte Richtung in der Außenwandung.

Gemäß einer Weiterbildung des Aufbohrwerkzeugs weist die Verbindungsstruktur eine der ersten Verbindungswandung verschiedene ein- oder mehrteilige zweite Verbindungswandung auf und ist die zweite Verbindungswandung mit dem Kernstrukturelement und der Außenwandung jeweils materialnahtlos monolithisch verbunden. Dadurch wird in vorteilhafterweise das Flächenträgheitsmoment, insbesondere das polare Flächenträgheitsmoment, des Aufbohrwerkzeugs noch weiter erhöht, so dass die Außenwandung noch besser gegen eine Verformung stabilisiert wird. Die zweite Verbindungswandung ist vorzugsweise dadurch der ersten Verbindungswandung verschieden, dass sie anders orientiert ist und ansonsten der ersten Verbindungswandung analog ausgeformt ist. Die zweite Verbindungswandung kann dabei eine konstante oder variierende Wandstärke aufweisen. Vorzugsweise ist die Wandstärke der zweiten Verbindungswandung kleiner als eine Wandstärke der Außenwandung im Bereich der Verbindungsstruktur. Vorzugsweise sind die Wandstärken dabei jeweils in eine Normalenvektorrichtung zu einer jeweiligen Oberfläche der zweiten Verbindungswandung bzw. der Außenwandung bemessen. Zur weiteren Gewichtseinsparung weist die zweite Verbindungswandung vorzugsweise mindestens eine Ausnehmung auf. Vorzugsweise entspricht die Wandstärke der zweiten Verbindungswandung der Wandstärke der ersten Verbindungswandung. Besonders bevorzugt ist es, wenn die zweite Verbindungswandung mehrteilig ausgebildet ist, so dass diese zum Beispiel zwei, vier oder mehr Verbindungswandungsteile umfasst.

Gemäß einer Weiterbildung des Aufbohrwerkzeugs ist die zweite Verbindungswandung entlang einer zweiten Schraubenlinie mit einer der Längsachse entsprechenden Schraubenachse erstreckend ausgeformt. Dadurch wird die Torsionssteifigkeit der Verbindungsstruktur und damit der Stabilisierungsstruktur und damit der Außenwandung noch weiter verbessert, weil sich die zweite Verbindungswandung zumindest teilweise entweder in Richtung einer Torsionsspannung der Außenwandung oder dazu entgegensetzt erstreckt. Letzteres ist für das Zusammenwirken einer anderen sich in Richtung der Torsionsbelastung erstreckenden Verbindungswandung zur Stützung dieser relevant. Die zweite Schraubenlinie kann dabei zum Beispiel in kartesischen Koordinaten mit einem Ursprung auf der Längsachse bereichsweise durch einen Vektor mit den Koordinaten r·cos(t) in x-Richtung, r·sin(t) in y-Richtung und h·t in z-Richtung beschrieben werden, wobei r, t und h reelle Zahlen sind und somit r ein Maß für den Radius, also den senkrecht zur Längsachse bemessenen Abstand eines Punkts der zweiten Schraubenlinie ist, und b/a ein Maß für die Steigung der zweiten Schraubenlinie und t eine Variable für einen vom Radius und einer quer zur Längsachse bemessenen Querachse eingeschlossenen Winkel ist. Die Werte von r und h können konstant sein oder bereichsweise, zum Beispiel in Umfangsrichtung und/oder in Richtung der Längsachse, variieren. Die Werte von r und h können den entsprechenden Werten der ersten Schraubenlinie entsprechen. Die Variable t der zweiten Schraubenlinie kann ein der Variablen t der ersten Schraubenlinie entgegensetztes Vorzeichen oder dasselbe Vorzeichen haben. Mit mehrteilig ist dabei insbesondere gemeint, dass die zweite Verbindungswandung mehrere drehsymmetrische Wandungen umfasst, wobei die Längsachse des Aufbohrwerkzeugs eine entsprechende Drehsymmetrieachse ist. Mit der zweiten Schraubenlinie ist damit eine Mehrzahl um die Längsachse gedrehter Schraubenlinien gemeint, beispielsweise um 90° gedrehter Schraubenlinien, so dass die zweite Verbindungswandung in diesem Falle mehrteilig ist, zum Beispiel vier drehsymmetrische Wandungen umfasst, deren Erstreckung bis auf eine Drehung um die Längsachse durch die, zum Beispiel konstanten oder bereichsweise variierenden, Parameter der zweiten Schraubenlinie einer einteiligen zweiten Verbindungswandung beschrieben werden können.

Gemäß einer Weiterbildung des Aufbohrwerkzeugs ist die zweite Schraubenlinie im Bearbeitungsdrehsinn gewunden. Dadurch wird durch ein Zusammenwirken mit der ersten Verbindungswandung, insbesondere wenn deren Schraubenlinie entgegen dem Bearbeitungsdrehsinn gewunden ist, noch bessere Stabilisierung der Außenwandung gegen die Verformung, insbesondere im Falle einer Torsionsverformung, durch die Stabilisierungsstruktur bereitgestellt, indem die zweite Verbindungswandung die erste Verbindungswandung stützt.

Gemäß einer Weiterbildung des Aufbohrwerkzeugs weist das Kernstrukturelement eine einen Innenraum des Aufbohrwerkzeugs zumindest abschnittsweise umfänglich umgebend ausgeformte Kernwandung auf. Dadurch ist das Kernstrukturelement insbesondere als Hohlkörper ausgeformt, was noch weiter Gewicht reduziert. In besonders vorteilhafterweise ist das Kernstrukturelement danach als rohrförmiges Element ausgestaltet, wobei eine Längsachse des Kernstrukturelements der Längsachse der Aufbohrwerkzeugs fluchtend ist.

Gemäß einer Weiterbildung des Aufbohrwerkzeugs weist die Stabilisierungsstruktur eine ein- oder mehrteilige Kernwandungsverbindungswandung auf und ist die Kernwandung durch die Kernwandungsverbindungswandung mit sich selbst materialnahtlos monolithisch verbunden. Dadurch werden die Kernwandung und damit das Kernstrukturelement zur Aufnahme der durch die Außenwandung aufgenommenen und über die Verbindungsstruktur kraftflussgemäß weitergeleiteten Verformungskräfte noch besser stabilisiert. Vorzugsweise ist die Wandstärke der Kernwandung kleiner als eine Wandstärke der Außenwandung im Bereich der Verbindungsstruktur. Vorzugsweise sind die Wandstärken dabei jeweils in eine Normalenvektorrichtung zu einer jeweiligen Oberfläche der zweiten Verbindungswandung bzw. der Außenwandung bemessen. Zur weiteren Gewichtseinsparung weist die zweite Kernwandung vorzugsweise mindestens eine Ausnehmung auf. Vorzugsweise entspricht die Wandstärke der Kernwandungsverbindungswandung der Wandstärke der ersten Verbindungswandung oder der zweiten Verbindungswandung.

Gemäß einer Weiterbildung des Aufbohrwerkzeugs ist die Kernwandungsverbindungswandung entlang einer dritten Schraubenlinie mit einer der Längsachse entsprechenden Schraubenachse erstreckend ausgeformt. Dadurch wird die Torsionssteifigkeit der Kernwandung und damit der Stabilisierungsstruktur und damit der Außenwandung noch weiter verbessert, weil sich die Kernwandungsverbindungswandung entweder in Richtung einer Torsionsspannung der Außenwandung oder dazu entgegensetzt erstreckt. Letzteres ist für das Zusammenwirken einer anderen sich in Richtung der Torsionsbelastung erstreckenden Verbindungswandung, zum Beispiel der ersten Verbindungswandung, zur Stützung dieser relevant. Die dritte Schraubenlinie kann dabei zum Beispiel in kartesischen Koordinaten mit einem Ursprung auf der Längsachse bereichsweise durch einen Vektor mit den Koordinaten r·cos(t) in x-Richtung, r·sin(t) in y-Richtung und h·t in z-Richtung beschrieben werden, wobei r, t und h reelle Zahlen sind und somit r ein Maß für den Radius, also den senkrecht zur Längsachse bemessenen Abstand eines Punkts der dritten Schraubenlinie ist, und b/a ein Maß für die Steigung der dritten Schraubenlinie und t eine Variable für einen vom Radius und einer quer zur Längsachse bemessenen Querachse eingeschlossenen Winkel ist. Die Werte von r und h können konstant sein oder bereichsweise, zum Beispiel in Umfangsrichtung oder in Richtung der Längsachse, variieren. Die Werte von r und h können den entsprechenden Werten der ersten oder zweiten Schraubenlinie entsprechen. Die Variable t der dritten Schraubenlinie kann ein der Variablen t der ersten Schraubenlinie entgegensetztes oder dasselbe Vorzeichen haben. Die Variable t der dritten Schraubenlinie kann ein der Variablen t der zweiten Schraubenlinie entgegensetztes oder dasselbe Vorzeichen haben. Mit mehrteilig ist dabei insbesondere gemeint, dass die Kernwandungsverbindungswandung mehrere drehsymmetrische Wandungen umfasst, wobei die Längsachse des Aufbohrwerkzeugs eine entsprechende Drehsymmetrieachse ist. Mit der dritten Schraubenlinie ist damit eine Mehrzahl um die Längsachse gedrehter Schraubenlinien gemeint, beispielsweise um 90° oder 180° gedrehter Schraubenlinien, so dass die Kernwandungsverbindungswandung in diesem Falle mehrteilig ist, zum Beispiel vier drehsymmetrische Wandungen umfasst, deren Erstreckung bis auf eine Drehung um die Längsachse durch die, zum Beispiel konstanten oder bereichsweise variierenden, Parameter der dritten Schraubenlinie einer einteiligen Kernwandungsverbindungswandung beschrieben werden können.

Gemäß einer Weiterbildung des Aufbohrwerkzeugs ist die dritte Schraubenlinie im Bearbeitungsdrehsinn gewunden. Dadurch wird durch ein Zusammenwirken mit der ersten Verbindungswandung und/oder zweiten Verbindungswandung eine noch bessere Stabilisierung der Außenwandung gegen die Verformung, insbesondere im Falle einer Torsionsverformung, durch die Stabilisierungsstruktur bereitgestellt, weil sich die Wandungen der Stabilisierungsstruktur im Belastungsfalle der Außenwandung gegenseitig abstützen.

Gemäß einer Weiterbildung des Aufbohrwerkzeugs ist der ersten Schraubenlinie, der zweiten Schraubenlinie oder der dritten Schraubenlinie eine tatsächliche oder hypothetische Umrundung der Längsachse zuordenbar, ist durch die Umrundung eine tatsächliche bzw. hypothetische Erstreckung der ersten, zweiten bzw. dritten Schraubenlinie parallel zur Längsachse definiert und ist ein Funktionswert einer Arcuskosinusfunktion mit einem durch das Verhältnis der Erstreckung zu der Umrundung gebildeten Argument größer oder gleich 15° und kleiner oder gleich 45°. Dadurch wird eine besonders vorteilhafte Steigung der ersten, zweiten bzw. dritten Schraubenlinie bereitgestellt, weil unter Winkeln größer oder gleich 15° und kleiner oder gleich 45° üblicherweise die größten Torsionsspannungen auf die Außenwandung wirken, so dass diesen Spannungen durch eine entsprechende Steigung der Schraubenlinien besonders vorteilhaft im Sinne einer Verformungsstabilisierung der Außenwandung durch die Stabilisierungsstruktur entgegengewirkt werden kann. Vorteilhafte Funktionswerte der Arcuskosinusfunktion sind dabei 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44° oder 45°.

Gemäß einer Weiterbildung des Aufbohrwerkzeugs ist durch die erste Schraubenlinie und die zweite Schraubenlinie mindestens ein gemeinsamer Schnittpunkt auf einer der Stabilisierungsstruktur zugewandten Innenoberfläche der Außenwandung definiert und ist eine Umfangsposition und eine Längsachsenposition eines der Schneidelemente durch den Schnittpunkt definiert. Dadurch wird eine besonders vorteilhafte Abstützung des Schneidelements gegen Schnittkräfte bereitgestellt, deren Kraftkomponenten senkrecht auf das Innere des Aufbohrwerkzeugs gerichtet sind. Im Falle einer zylindrischen Außenwandung kann dies als radiale Abstützung des Schneidelements bezeichnet werden. Dementsprechend wird nach dieser Weiterbildung auch die Umfangsposition und die Längsachsenposition eines Teils der Aufnahmestruktur durch den Schnittpunkt definiert, also des Teils, insbesondere eines durch die Aufnahmestruktur gebildeten Plattensitzes, der das Schneidelement aufnimmt. Die durch diese Weiterbildung hervorgerufene Abstützung des Schneidelements wird noch weiter verbessert, wenn die durch den Schnittpunkt definierte Umfangsposition und Längsachsenposition des Schneidelements und damit des entsprechenden Teils der Aufnahmestruktur mit einem geometrischen Mittelpunkt des Schneidelements oder des Teils der Aufnahmestruktur zusammenfällt. Ein solcher geometrischen Mittelpunkt fällt vorzugsweise mit einer Ausnehmung, insbesondere einer Bohrung, des Schneideelements und einer ein Innengewinde aufweisenden Ausnehmung, insbesondere einer Bohrung mit einem Innengewinde, des Teils der Aufnahmestruktur zusammen.

Gemäß einer Weiterbildung des Aufbohrwerkzeugs weist die Außenwandung oder die Stabilisierungsstruktur mindestens eine Ausnehmung mit einem ersten konkaven Abschnitt und einem dem ersten konkaven Abschnitt gegenüberliegend angeordneten zweiten konkaven Abschnitt derart auf, dass ein Krümmungsradius des ersten konkaven Abschnitts einem Krümmungsradius des zweiten konkaven Abschnitts verschieden ist. Dadurch wird einerseits Material und damit Gewicht im Bereich der Außenwandung gespart. Andererseits wird dadurch eine generative Herstellung des Aufbohrwerkzeugs verbessert, indem durch diese Form, welche als tropfenförmig bezeichnet werden kann, der Ausnehmung überschüssiges Ausgangspulver aus dem Ausbohrwerkzeug entfernt werden kann und zugleich eine geeignete Abstützung gegen ein Absinken des Ausgangspulvers im Bereich der Ausnehmung bereitgestellt wird, insbesondere wenn der Krümmungsradius des ersten Abschnitts kleiner ist als der Krümmungsradius des zweiten Abschnitts und der erste Abschnitt einer Stirnseite des Aufbohrwerkzeugs in Richtung der Längsachse näher beabstandet ist als der zweite Abschnitt, weil dies der Richtung eines schichtweisen generativen Aufbaus des Aufbohrwerkzeugs im Bereich seines Grundkörpers entspricht, sofern die Druckrichtung auf die Stirnseite zu orientiert ist.

Gemäß einer Weiterbildung des Aufbohrwerkzeugs ist mindestens eines der Schneidelemente durch ein mechanisches Befestigungselement reversibel lösbar mit der Aufnahmestruktur verbunden. Dadurch wird in vorteilhafterweise eine besonders einfache Montage des Schneidelements bereitgestellt, so dass das Schneidelement zum Beispiel im Wartungs- oder Reparaturfalle zerstörungsfrei von der Aufnahmestruktur entfernt werden kann. Das mechanische Befestigungselement kann beispielsweise als Schraubenelement ausgeformt sein, welches in einer Ausnehmung des Schneidelements abschnittsweise angeordnet ist und im Bereich eines Gewindes mit einem Innengewinde der Aufnahmestruktur derart in Eingriff steht, dass das Schneidelement durch das Schraubenelement gegen die Aufnahmestruktur gepresst wird. Das Schneidelement ist dabei vorzugsweise zweiteilig aufgebaut, indem die Ausnehmung des Schneidelements in einem Trägerelement des Schneidelements ausgeformt ist und mindestens eine Schneide, welche vorzugsweise einen Schneidkeil aufweist, des Schneidelements, vorzugsweise mittels einer Lötverbindung oder Klebeverbindung, mit dem Trägerelement stoffschlüssig verbunden ist. Das Trägerelement ist dabei vorzugsweise generativ aus einem Ausgangspulver, zum Beispiel durch selektives Laserschmelzen dieses Pulvers und anschließendes Erstarren des Pulvers, hergestellt. Die Schneide ist dabei vorzugsweise aus einem polykristallinen Diamantmaterial oder einem Hartmetall (*cemented carbide*), welches zum Beispiel Hartstoffpartikel in Form von WC-Partikeln in einer demgegenüber duktilen Matrix, zum Beispiel auf Basis einer Co-Legierung, aufweist, hergestellt.

Gemäß einer Weiterbildung des Aufbohrwerkzeugs ist bzw. sind die Außenwandung und/oder die Innenwandung entlang der Längsachse zumindest abschnittsweise rohrförmig ausgebildet. Hierbei handelt es sich um eine gewichtssparende und zugleich stabile Form der Außen- bzw. Innenwandung. Mit rohrförmig wird dabei im Wesentlichen um die Längsachse diskret oder kontinuierlich drehsymmetrisch, im Inneren hohl und insgesamt mit einer im Vergleich zum Durchmesser der Außen- bzw. Innenwandung dünnen Wandstärke versehen ausgebildet gemeint, wobei die Wandstärke der Außen- oder Innenwandung variieren kann.

Gemäß einer Weiterbildung des Aufbohrwerkzeugs ist durch die Außenwandung ein um die Längsachse umlaufend geschlossener materialnahtloser monolithischer Materialpfad gebildet. Dadurch wird die Außenwandung besonders torsionssteif bereitgestellt. Punkte des Materialpfads können dabei einen konstanten, zum Beispiel im Sinne einer Kreisbahn, oder veränderlichen Abstand, zum Beispiel im Sinne einer elliptischen Bahn, zur Längsachse aufweisen.

Gemäß einer Weiterbildung des Aufbohrwerkzeugs sind mindestens zwei der Schneidelemente an verschiedenen Längsachsenpositionen angeordnet. Hierbei handelt es sich um eine besonders zweckmäßige Weiterbildung, weil dadurch die Ausnehmung des metallischen Werkstücks an mehreren Längsachsenpositionen dieser durch das Aufbohrwerkzeug bearbeitet werden kann. Vorzugsweise sind die Teile der Aufnahmestruktur, welche die Schneidelemente der verschiedenen Längsachsenpositionen aufnehmen, durch einen materialnahtlosen monolithischen Materialpfad entlang der Längsachse miteinander verbunden. Dies erhöht die Verformungsstabilität des Aufbohrwerkzeugs noch weiter.

Gemäß einer Weiterbildung des Aufbohrwerkzeugs ist eine Anordnungsschraubenlinie der ersten Schraubenlinie entsprechend um die Außenwandung gewunden und sind mindestens zwei der Schneidelemente entlang der Anordnungsschraubenlinie angeordnet. Dadurch sind die Schneidelemente dort angeordnet, wo die erste Schraubenlinie und damit zumindest ein Teil der Verbindungsstruktur verläuft, so dass auf diese Weise eine besonders gute Abstützung der Außenwandung und damit Schneidelemente der durch die Stabilisierungsstruktur im Bereich ihrer Verbindungsstruktur bereitgestellt wird, nämlich zum Beispiel dort wo die Schnittkräfte eingeleitet werden. Die Aufnahmestruktur, insbesondere in Form einzelner Plattensitze, ist dementsprechend der Anordnungsschraubenlinie folgend ausgebildet. Die Parameter der ersten Schraubenlinie und der Anordnungsschraubenlinie unterscheiden sich folglich lediglich in Bezug auf einen Abstand zur Längsasche.

Gemäß einer Weiterbildung des Aufbohrwerkzeugs umfasst mindestens eines der Schneidelemente eine Schneide aus einem polykristallinen Diamantmaterial und ein mit der Schneide stoffschlüssig verbundenes Schneidenträgerelement. Hierbei handelt es sich um eine besonders zweckmäßige Maßnahme, weil solchermaßen bereitgestellte Schneidelemente besonders verschleißfest sind und in einem in der Aufnahmestruktur, insbesondere im Form von Plattensitzen, aufgenommenen Zustand gemäß einem vorgegebenen Außendurchmesser im Bereich der Schneidelemente durch zum Beispiel einen Laserstrahl teilweise abgetragen werden können, um so ein Endmaß gemäß einem vorgegebenen Außendurchmesser des Aufbohrwerkzeugs zu erhalten. Unter dem polykristallinen Diamantmaterial ist insbesondere ein Material zu verstehen, bei dem eine Mehrzahl von Diamantkörnern bzw. Diamantkristallen mittels eines CVD Verfahrens aus einer Gasphase ausgeschieden wurden. Vorzugsweise ist das polykristalline Diamantmaterial einphasig, also aus einer Diamantphase bestehend. Mit einphasig ist insbesondere gemeint, dass die Diamantkörner bzw. Diamantkristalle des polykristallinen Diamantmaterials gebildet sind.

Das Schneidelement ist dabei vorzugsweise zweiteilig aufgebaut, indem eine Ausnehmung des Schneidelements in dem Schneidenträgerelement, welches auch als Trägerelement bezeichnet werden kann, ausgeformt ist und die Schneide, welche vorzugsweise einen Schneidkeil aufweist, vorzugsweise mittels einer Lötverbindung mit dem Trägerelement stoffschlüssig verbunden ist. Das Trägerelement ist dabei vorzugsweise generativ aus einem Ausgangspulver, zum Beispiel durch selektives Laserschmelzen des Pulvers und anschließendes Erstarren des Pulvers, hergestellt.

Gemäß einer Weiterbildung des Aufbohrwerkzeugs ist für mindestens eines der Schneidelemente eine Kühlmittelkanalstruktur in der Stabilisierungsstruktur und der Außenwandung zur Kühlmittelversorgung des Schneidelements materialnahtlos monolithisch ausgebildet. Dadurch wird die Standzeit des Schneidelements und damit des Aufbohrwerkzeugs erhöht, weil durch die Kühlmittelversorgung eine Temperierung des Schneidelements, insbesondere im Bereich der Schneide, bereitgestellt wird, so dass einem Überhitzen des Schneidelements vorgebeugt werden kann. Vorzugsweise ist dabei eine Austrittsöffnung, aus welcher ein Kühlmittel austreten kann, der Kühlmittelkanalstruktur in der Aufnahmestruktur vorgesehen. Vorzugsweise ist dabei ein Kanal der Kühlmittelkanalstruktur parallel zur Längsachse derart angeordnet, dass dieser materialnahtlos monolithisch mit der Außenwandung und der Verbindungsstruktur verbunden ist. Vorzugsweise wird durch die Austrittsöffnung eine direkter Austritt des Kühlmittels aus der Außenwandung auf eine Schneide des Schneidelements bereitgestellt oder ein indirekter Ausritts des Kühlmittels derart, dass das Kühlmittel von der Austrittsöffnung in einen Schneidenträger, insbesondere eine Kassette, des Schneidelements durch eine entsprechende Gegenöffnung des Schneidenträgers übertritt, über welche so dann die Kühlmittelversorgung der Schneide erfolgt.

Gemäß einer Weiterbildung des Aufbohrwerkzeugs ist die Verbindungsstruktur mit der Außenwandung und dem Kernstrukturelement dadurch jeweils materialnahtlos monolithisch verbunden, dass ein Pulvermaterial selektiv aufgeschmolzen und anschließend erstarrt wird. Hierbei handelt es sich um eine besonders zweckmäßige Maßnahme, die materialnahtlose monolithische Verbindung zu realisieren. Für das Aufschmelzen des Pulvermaterials, welches auch als Ausgangspulver bezeichnet werden kann, kommt insbesondere selektives Laserschmelzen in Betracht, wodurch das Pulvermaterial (Ausgangspulver) schichtweise gemäß der für jede Schicht des Pulvermaterials gewünschten Geometrie des Aufbohrwerkzeugs mit mindestens einem Laserstrahl aufgeschmolzen wird und anschließend durch Abkühlung erstarrt.

Gemäß einer Weiterbildung des Aufbohrwerkzeugs ist die Kernwandungsverbindungswandung mit der Kernwandung dadurch materialnahtlos monolithisch verbunden, dass ein Pulvermaterial, aus welchem das Aufbohrwerkzeug hergestellt ist, selektiv aufgeschmolzen und anschließend erstarrt wird. Hierbei handelt es sich um eine besonders zweckmäßige Maßnahme, die materialnahtlose monolithische Verbindung zu realisieren. Für das Aufschmelzen des Pulvermaterials, welches auch als Ausgangspulver bezeichnet werden kann, kommt insbesondere selektives Laserschmelzen in Betracht, wodurch das Pulvermaterial (Ausgangspulver) schichtweise gemäß der für jede Schicht des Pulvermaterials gewünschten Geometrie des Aufbohrwerkzeugs mit mindestens einem Laserstrahl aufgeschmolzen wird und anschließend durch Abkühlung erstarrt.

Gemäß einer Weiterbildung des Aufbohrwerkzeugs ist der stabilisierungsstrukturfreie Bereich zumindest bereichsweise mit einem Dämpfungsmaterial zur Dämpfung einer Schwingung der Außenwandung gefüllt und ist das Dämpfungsmaterial mit der Außenwandung und der Verbindungsstruktur verbunden. Dadurch wird die Schwingungsstabilität der Außenwandung und damit des Aufbohrwerkzeugs erhöht, wobei für das Dämpfungsmaterial ein Material mit einem dem E-Modul der Außenwandung niedrigeren E-Modul, zum Beispiel ein Gummimaterial, in Betracht kommt, welches zum Beispiel mittels einer Klebeverbindung mit der Verbindungsstruktur adhäsiv verbunden sein kann. Denkbar und auch möglich sind aber von dem Gummimaterial verschiedene Materialien.

Weitere Vorteile und Zweckmäßigkeiten der Erfindung ergeben sich anhand der nachfolgenden Beschreibung eines Ausführungsbeispiels unter Bezugnahme auf die beigefügten Figuren.

Von den Figuren zeigen:
- Fig. 1:: eine schematische perspektivische Darstellung eines Aufbohrwerkzeugs im Bereich eines Grundkörpers nach einer Ausführungsform ohne Darstellung von Schneidelementen;
- Fig. 2:: eine schematische Darstellung des Aufbohrwerkzeugs im Bereich des Grundkörpers nach Fig. 1 gemäß einer Seitenansicht in Blickrichtung des Pfeils II aus Fig. 1;
- Fig. 3:: eine schematische Schnittdarstellung des Aufbohrwerkzeugs im Bereich des Grundkörpers nach Fig. 1 gemäß der Schnittlinie III aus Fig. 2;
- Fig. 4:: eine schematische Schnittdarstellung des Aufbohrwerkzeugs im Bereich des Grundkörpers nach Fig. 1 gemäß der Schnittlinie IV aus Fig. 2;
- Fig. 5:: eine schematische perspektivische Darstellung des Aufbohrwerkzeugs nach Fig. 1 mit Schneidelementen;
- Fig. 6:: eine schematische perspektivische Darstellung des Aufbohrwerkzeugs nach Fig. 5 im Bereich eines Schneidelements;
- Fig. 7:: eine schematische perspektivische Darstellung des Aufbohrwerkzeugs nach Fig. 5 im Bereich eines Führungsleistenelements.

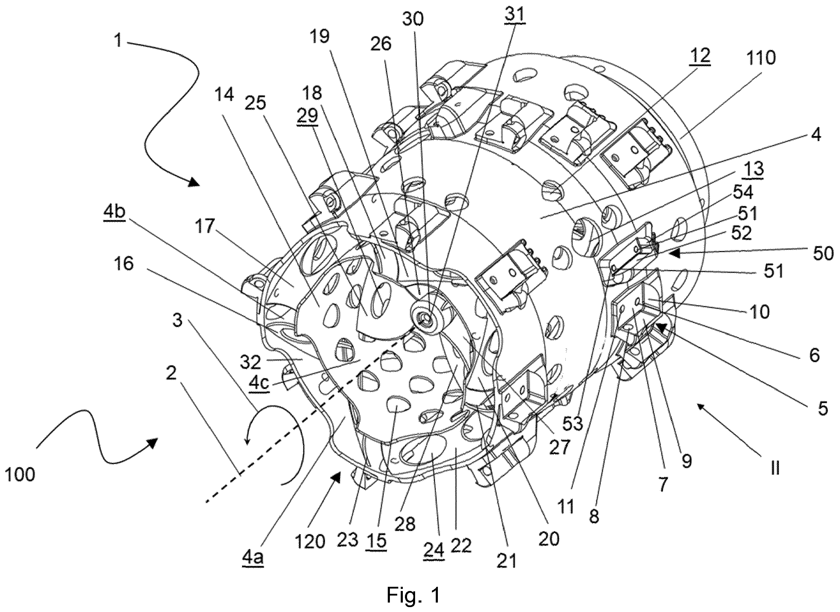

In den Figuren 1a bis 7 werden gleiche, ähnliche oder gleichwirkende Elemente mit identischen Bezugszeichen bezeichnet und eine wiederholte Beschreibung dieser Elemente wird in der nachfolgenden Beschreibung vermieden, um Redundanzen zu vermeiden.

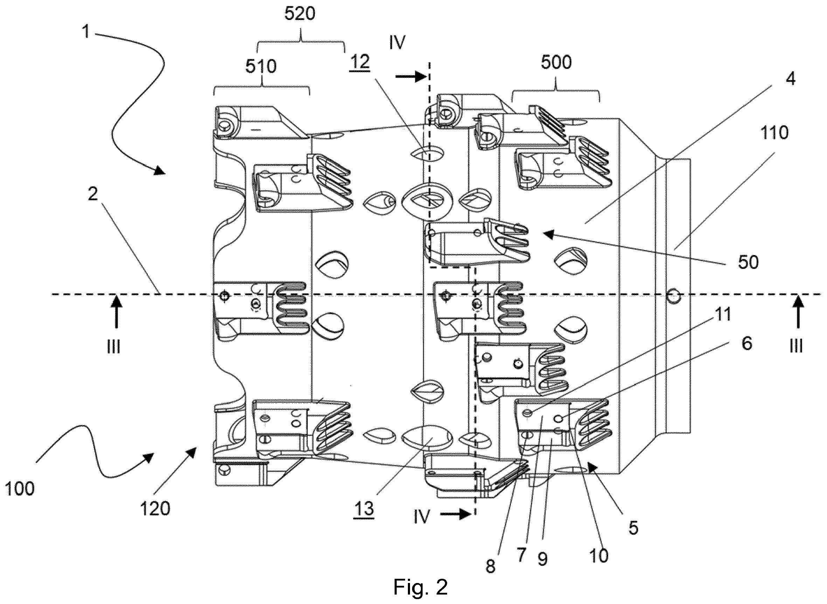

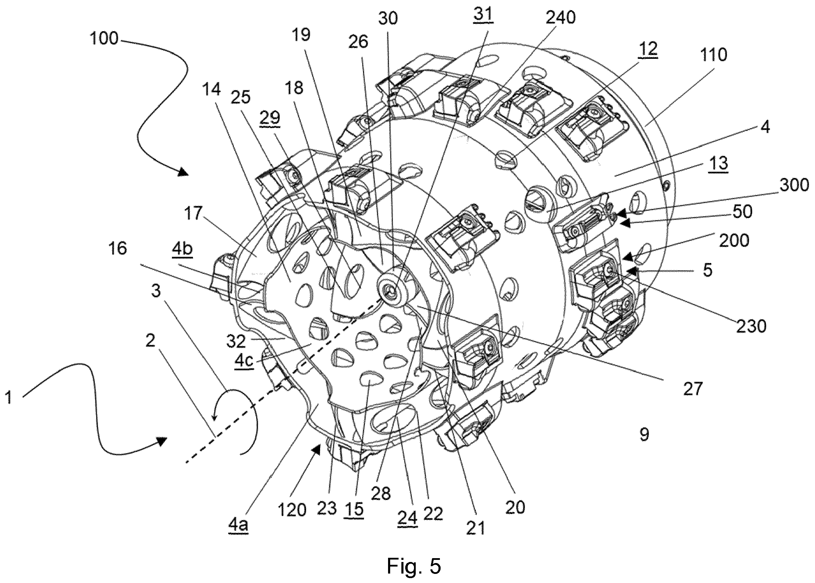

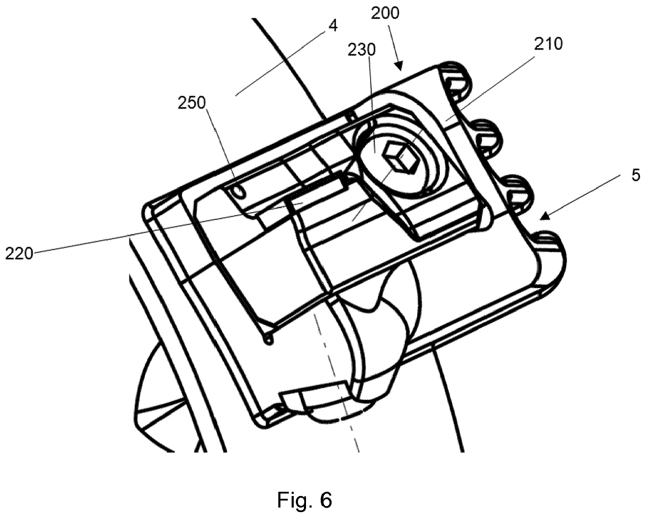

Fig. 1 und 2 zeigen eine schematische Darstellung eines Aufbohrwerkzeugs 1 im Bereich eines Grundkörpers 100 des Aufbohrwerkzeugs 1 ohne Schneidelemente perspektivisch bzw. gemäß einer Seitenansicht in Blickrichtung des Pfeils II aus Fig. 1; auf das Aufbohrwerkzeug 1 mit Schneidelementen bzw. den Grundkörper 100 mit montierten Schneidelementen wird Bezug nehmend auf Fig. 5 und 6 eingegangen.

Indem das Aufbohrwerkzeug 1 ohne Schneidelemente und entsprechende Befestigungsmittel offenbart ist, wird dadurch auch der Grundkörper 100 des Aufbohrwerkzeugs 1 offenbart. Das Aufbohrwerkzeug 1 ist im Bereich des Grundkörpers 100 aus einem Stahlpulver durch schichtweises Aufschmelzen des Stahlpulvers mittels Laserstrahlen und anschließendes Erstarren des Stahlpulvers hergestellt. Dies kann auch als generative Herstellung des Aufbohrwerkzeugs 1 bezeichnet werden. Das Aufbohrwerkzeug 1 ist daher im Bereich des Grundkörpers 100 materialnahtlos monolithisch aufgebaut, so dass Übergange von einem Bereich des Aufbohrwerkzeugs 1 im Bereich des Grundkörpers 100 zu einem anderen Bereich des Aufbohrwerkzeugs 1 im Bereich des Grundkörpers 100 strukturell und chemisch, bis auf unvermeidbare Abweichungen aufgrund von strukturellen oder chemischen Inhomogenitäten des Stahlpulvers, mit beliebigen anderen Übergangen oder sonstigen Bereichen des Aufbohrwerkzeugs 1 im Bereich des Grundkörpers 100 identisch sind.

Das Aufbohrwerkzeug 1 und damit der Grundkörper 100 sind um eine Längsachse 2 in eine Drehrichtung 3 drehbar bzw. drehantreibbar, so dass die Längsachse 2 auch als Drehachse und die Drehrichtung als Drehsinn bezeichnet werden können. Das Aufbohrwerkzeug 1 ist im Bereich des Grundkörpers 100 parallel zur Längsachse 2 schichtweise aus dem Stahlpulver generativ hergestellt, und zwar beginnend mit der schichtweisen Herstellung des Verbindungsabschnitts 110, über welchen das Aufbohrwerkzeug 1 im Bereich des Grundkörpers 100 mit einer Werkzeugspindel verbunden werden kann, und endend mit der schichtweisen Herstellung einer Stirnseite 120 des Aufbohrwerkzeugs 1 im Bereich des Grundkörpers 100.

Wenn das Aufbohrwerkzeug 1 bzw. der Grundkörper 100 um die Längsachse 2 gedreht wird, drehen sich eine rohrförmige Außenwandung 4, welche einen Innenraum 4a des Aufbohrwerkzeugs 1 im Bereich des Grundkörpers 100 tangential umgibt, des Aufbohrwerkzeugs 1 im Bereich des Grundkörpers 100 und damit Kassettensitze 5, von denen exemplarisch einer mit dem Bezugszeichen 5 versehen ist, der Außenwandung 4 in die Drehrichtung 3, so dass an den Kassettensitzen 5 befestigte Schneidelemente mit jeweils einer polykristallinen Diamantschneide, deren Schneidkeil zur Längsachse 2 radial orientiert ist, in Eingriff mit einer Statorbohrung, d. h. einem dadurch definierten Materialbereich, eines Aluminiumgehäuses für einen Elektromotor gebracht werden können. Auf diese Weise wird die Statorbohrung zerspanenden aufgeweitet.

Die Schneidelemente, auf welche Bezug nehmend auf Fig. 5 näher eingegangen wird, umfassen jeweils eine Kassette und eine an die Kassette gelötete Schneide und sind über die Kassetten an den Kassettensitzen 5, deren Gesamtheit als Aufnahmestruktur bezeichnet werden kann, der Außenwandung 4 dadurch befestigt, dass die Kassetten mittels Befestigungsschrauben, deren Außengewinde jeweils in Innengewinde 6 der Kassettensitze 5 geschraubt sind, gegen jeweils eine Anlagenfläche 7 der Kassettensitze 5 gepresst werden. Dadurch werden die Schneidelemente in radialer Richtung fixiert. Die Schneidelemente werden zusätzlich in tangentialer Richtung dadurch fixiert, dass weitere nicht dargestellte Befestigungsschrauben jeweils durch eine Öffnung 8 der Kassettensitze 5 gesteckt werden, wobei ein Außengewinde der weiteren Befestigungsschrauben dabei in Eingriff mit einem Innengewinde der Kassetten gebracht wird. Die Schneidelemente sind danach folglich auf zweifache Weise an den Kassettensitzen 5 befestigt, so dass die Schneidelemente dadurch jeweils gegen die Anlagefläche 7 der Kassettensitze 5 sowie gegen jeweils eine tangential orientierte Anlagefläche 9 der Kassettensitze 5 gepresst werden. Die Anlagefläche 9 wird somit bei einem Eingriff der Schneidelemente in das Aluminiumgehäuse mit einer tangentialen Schnittkraftkomponente und die Anlagefläche 7 mit einer radialen Schnittkraftkomponente beaufschlagt. Dementsprechend ist die Drehrichtung 3 durch eine tangentiale Normalenvektorkomponente, welche von der Anlagefläche 9 weg orientiert ist, der Anlagefläche 9 definiert. Zusätzlich kontaktieren die Kassetten dabei jeweils eine axial orientierte Anlagefläche 10 der Kassettensitze 5, so dass die Schneidelemente dadurch in axialer Richtung zusätzlich fixiert sind.

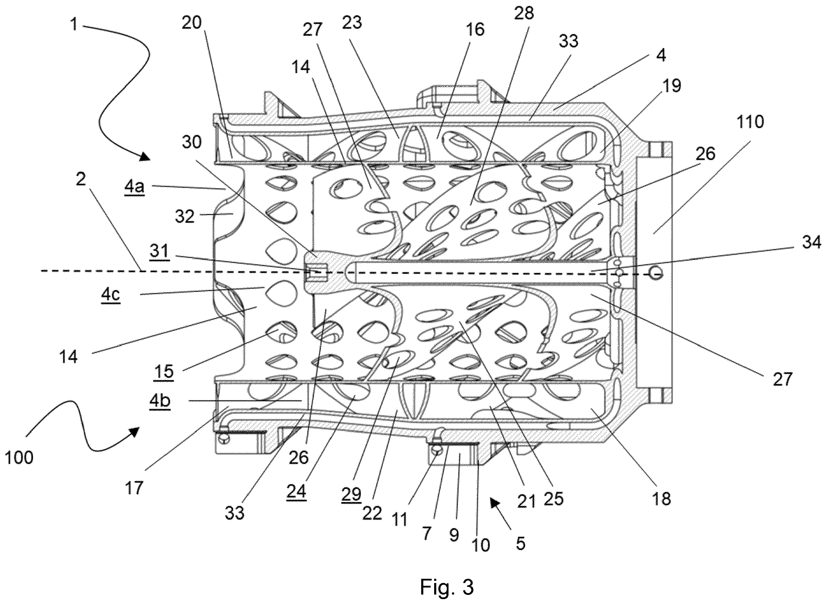

In die Anlageflächen 7 mündet jeweils eine Kühlmittelkanalöffnung 11 einer in Fig. 1 und Fig. 2 nicht ersichtlichen in die Außenwandung 4 integrierten Kühlmittelkanalstruktur, auf welche Bezug nehmend auf Fig. 3 näher eingegangen wird. Aus der Kühlmittelkanalöffnung 11 tritt Kühlmittel jeweils zur Kühlung der Schneidkeile aus, wenn die Kühlmittelkanalstruktur mit dem Kühlmittel druckbeaufschlagt geflutet wird, wobei das Kühlmittel zunächst in die Kassette eintritt und sodann aus der Kassette in Richtung der Schneide austritt.

In Fig. 2 ist besonders gut ersichtlich, dass die Kassettensitze 5 und damit die Schneidelemente bzw. die Kassetten bis auf eine dem Verbindungsabschnitt 110 axial nächst benachbarte Reihe 500 der Kassettensitze 5 und zwei der Stirnseite 120 axial nächst benachbarte bzw. axial übernächst benachbarte Reihen 510 und 520 der Kassettensitze 5 entlang einer Schraubenline auf der Außenwandung 4 angeordnet sind, wobei die Schraubenlinie in der Drehrichtung 3 und damit zu tangentialen Schnittkräften gegenläufig gewunden ist.

In Fig. 1 und Fig. 2 ist ferner besonders gut ersichtlich, dass die Außenwandung 4 verschieden große tropfenförmige Öffnungen 12 und 13 aufweist, durch welche Gewicht im Bereich der Außenwandung 4 eingespart und überschüssiges, nicht aufgeschmolzenes Stahlpulver aus dem Innenraum 4a des Aufbohrwerkzeugs 1 im Bereich des Grundkörpers 100 entfernt werden kann. Die Öffnungen 12 und 13 sind dabei derart tropfenförmig, dass jeweils ein konkaver Abschnitt kleineren Krümmungsradius einem Abschnitt größeren Krümmungsradius parallel zur Längsachse 2 gegenüberliegt und der Abschnitt kleineren Krümmungsradius der Stirnseite 120, welche in die Statorbohrung zuerst eingeführt wird, näher liegt als der Abschnitt größeren Krümmungsradius. Durch diese Form der Öffnungen 12 und 13 wird das Stahlpulver während der generativen Herstellung der Außenwandung 4 durch sich selbst gestützt.

In Fig. 1 ist außerdem besonders gut ersichtlich, dass sich in dem Innenraum 4a eine rohrförmige Innenwandung 14, welche aufgrund ihrer Anordnung auch als Kernwandung bezeichnet werden kann, im Bereich des Grundkörpers 100 des Aufbohrwerkzeugs 1 befindet, welche zur Gewichtseinsparung, Pulverentfernung und Stabilisierung des Stahlpulver beim Aufschmelzen den Öffnungen 12 und 13 analog geformte tropfenförmige Öffnungen 15 aufweist, deren Größe betragsmäßig zwischen den Größen der Öffnungen 12 und 13 liegt. Die Innwandung 14 umgibt dabei tangential einen Innenraum 4c, welcher denklogisch von den Innenräumen 4a und 4b umfasst ist. Die Außenwandung 4 ist mit der Innenwandung 14 über acht spiralförmige Wandungen 16, 17, 18, 19, 20, 21, 22 und 23, welche auch als Verbindungswandungen bezeichnet werden können, materialnahtlos monolithisch verbunden, was auch auf alle anderen Bereiche des Aufbohrwerkzeugs 1 im Bereich des Grundkörpers 100 aufgrund der generativen Herstellung des Aufbohrwerkzeugs 1 im Bereich des Grundkörpers 100 zutrifft. Dadurch wird die Außenwandung 4 durch die Wandungen 16, 17, 18, 19, 20, 21, 22 und 23 gegen die Innenwandung 14 abgestützt bzw. umgekehrt, und zwar gegen eine Verformung durch radiale und tangentiale Schnittkräfte, so dass die Wandungen 16, 17, 18, 19, 20, 21, 22 und 23 sowie die Innenwandung 14 als Stabilisierungsstruktur zur Stabilisierung der Außenwandung 4 gegen eine Verformung dieser bezeichnet werden können. Die tangentialen Schnittkräften rufen eine Torsionsspannung in der Außenwandung 4 hervor, so dass einer entsprechende Torsionsverformung der Auswandung 4 durch eine Torsionsverformung der Wandungen 16, 17, 18, 19, 20, 21, 22 und 23 sowie der Innenwandung 14 entgegenwirkt wird, so dass das Ausmaß einer Verformung der Außenwandung 4 dadurch gehemmt wird. Dabei sind die Wandungen 17, 19, 21 und 23 im Drehsinn 3 um die Längsachse 2 gewunden und die Wandungen 16, 18, 20 und 22 gegenläufig zum Drehsinn 3 um die Längsachse 2 gewunden, so dass sich die Wandungen 16 und 17, 18 und 19, 20 und 21 sowie 22 und 23 jeweils im Falle einer Torsionsverformung der Außenwandung 4 gegenseitig paarweise stützen. Die Wandungen 16, 18, 20 und 22 sind drehsymmetrische um die Längsachse 2 angeordnet gemäß einer entsprechend gedrehten Schraubenlinie. Die Wandungen 16, 18, 20 und 22 können danach auch als eine mehrteilige Wandung bezeichnet werden. Die Wandungen 17, 19, 21 und 23 sind drehsymmetrische um die Längsachse 2 angeordnet gemäß einer entsprechend gedrehten Schraubenlinie, welche der Schraubenlinie der Wandungen 16, 18, 20 und 22 entgegengesetzt um die Längsachse 2 gewunden ist. Die Wandung 17, 19, 21 und 23 können danach auch als eine mehrteilige Wandung bezeichnet werden.

Die Wandungen 16, 17, 18, 19, 20, 21, 22 und 23 schneiden sich gemäß ihrer Spiralform gegenseitig, so dass entsprechende Schnittbereiche, welche im Sinne der entsprechenden Schraubenlinien durch Schnittpunkte dieser gebildet werden, auf einer Innenoberfläche 32 der Außenwandung 4 gebildet werden. Bis auf die Kassettensitze 5 der Reihe 510 sind die Schnittpunkte jeweils derart auf der Außenwandung 4 angeordnet, dass jeweils ein Schnittpunkt einer Mitte der Anlageflächen 7 zugeordnet ist, so dass durch eine radiale Verformung der Außenwandung 4 im Bereich der Kassettensitze 5, die Außenwandung 4 dort durch zwei der Wandungen 16, 17, 18, 19, 20, 21, 22 im Sinne einer fachwerkartigen Struktur abgestützt wird. Die Wandungen 16, 17, 18, 19, 20, 21, 22 und 23 überbrücken dabei einen durch die Innenwandung 14 und die Außenwandung 4 gebildeten Zwischenraum 4b, welcher denklogisch von dem Innenraum 4a umfasst ist, wobei der Zwischenraum 4b dadurch in einen wandungshaltigen Bereich, also dort wo die Wandungen 16, 17, 18, 19, 20, 21, 22 und 23 stofflich verlaufen, und einen wandungsfreien Bereich, also dort wo die Wandungen 16, 17, 18, 19, 20, 21, 22 und 23 stofflich nicht verlaufen. Letzterer Bereich ist mit Umgebungsluft gefüllt und dementsprechend leicht.

Die Wandungen 16, 17, 18, 19, 20, 21, 22 und 23 weisen elliptische Öffnungen 24 in hypothetisch mechanisch weniger beanspruchten Bereichen dieser Wandungen, wodurch Gewicht eingespart wird. Daneben erleichtern auch die Öffnungen 24 die Pulverentfernung.

In Fig. 1 ist darüber hinaus besonders gut ersichtlich, dass die Innenwandung 14 mit sich selbst durch vier Wandungen 25, 26, 27, 28 und 29 materialnahtlos monolithisch verbunden ist, wodurch die Innenwandung 14 und damit die Außenwandung 4 gegen eine Torsionsverformung noch besser stabilisiert wird. Die Wandungen 25, 26, 27, 28 und 29 sind dazu spiralförmig um die Längsachse 2 im Drehsinn 3 gewunden. Die Wandungen 25, 26, 27, 28 und 29 weisen dabei elliptische Öffnungen 29 in hypothetisch mechanisch weniger beanspruchten Bereichen dieser Wandungen, wodurch Gewicht eingespart wird. Daneben erleichtern auch die Öffnungen 29 die Pulverentfernung. Die Wandungen 25, 26, 27, 28 und 29 können danach auch als eine mehrteilige Wandung bezeichnet werden. Die Wandung 17, 19, 21 und 23 sind drehsymmetrische um die Längsachse 2 angeordnet gemäß einer entsprechend gedrehten Schraubenlinie.

In Fig. 1 ist ferner ersichtlich, dass sich in der radial gesehenen Mitte der Innenwandung 14 eine mit den Wandungen 25, 26, 27, 28 und 29 materialnahtlos monolithisch verbundene Zentrierhülse 30 mit einer Zentrieröffnung 31 befindet. Das Aufbohrwerkzeug 1 kann im Bereich des Grundkörpers 100 durch Einführen eines Zentrierdorns in die Zentrieröffnung 31 einspannt werden, so dass die nicht dargestellten Schneidelemente mittels eines Lasers im Bereich ihres jeweiligen Schneidkeils derart abtragen werden können, dass beim Abtragen ein einheitlicher Außendurchmesser des Aufbohrwerkzeugs 1 im Bereich der Schneidkeilte mit einem Zentrum auf der Längsachse 2 erzeugt wird.

In Fig. 1 ist außerdem ersichtlich, dass die Außenwandung 4 Kassettensitze 50 zur Aufnahme von Kassetten für Führungsleisten aufweist, wobei diese Kassetten und ihre Führungsleisten Führungsleistenelemente bilden; auf die Führungsleistenelemente wird Bezug nehmend auf Fig. 5 näher eingegangen. Die Führungsleisten kontaktieren beim Aufbohren der Statorbohrung diese und sorgen damit dafür, dass das Aufbohrwerkzeug 1 radial an einer entsprechenden Bohrungssinnenwandung im Bereich der Führungsleisten und damit diesen umfänglich nächstbenachbarten Schneiden geführt wird. Die Kassettensitze 50 weisen jeweils zwei Öffnungen 51 mit einem Innengewinde auf, über welche die Kassetten für die Führungsleisten mittels entsprechender Befestigungsschrauben befestigt werden können. Wenn die Kassetten für die Führungsleisten derart befestigt sind, werden diese Kassetten radial gegen eine Auflagefläche 53 der Kassettensitze 50 gepresst und tangential durch eine Tangentialfläche 52 der Kassettensitze 50 sowie axial durch eine Axialfläche 54 der Kassettensitze 50 gestützt. Die Anzahl der Kassettensitze 50 beträgt exemplarisch vier, wobei die entsprechend darin befestigten Führungsleisten den umfänglich nächstbenachbarten Schneiden zugeordnet sind. Denkbar und auch möglich ist auch eine andere Anzahl. Die Kassettensitze 50 sind auf derselben Längsachsenposition des Grundkörpers 100 umfänglich angeordnet, so dass eine Reihe der Kassettensitze 50 bei dem Aufbohrwerkzeug 1 bzw. dem Grundkörper 100 vorhanden ist. Denkbar und auch möglich sind aber auch mehrere solcher Reihen, so dass zum Beispiel jeder Schneide eine Führungsleiste funktional zugeordnet ist.

An dieser Stelle wird ausdrücklich festgehalten, dass die Kassettensitze 5 und 50 mit der Außenwandung 4 und damit mit dem Grundkörper 100 materialnahtlos monolithisch verbunden sind, weil diese zusammen mit dem Grundkörper 100 generativ hergestellt sind.

Fig. 3 zeigt eine schematische Schnittdarstellung des Aufbohrwerkzeugs 1 im Bereich des Grundkörpers 100 nach Fig. 1 gemäß der Schnittlinie III aus Fig. 2. Aus Fig. 3 ist der innere, materialnahtlos monolithische Aufbau des Aufbohrwerkzeugs 1 im Bereich des Grundkörpers 100 anhand der einheitlichen Schraffur der dargestellten Schnittfläche besonders gut ersichtlich. Darüber hinaus ist in Fig. 3 am Beispiel der Schraffur im Bereich der Wandungen 16 und 23 sowie der Wandungen 21 und 22 für die Wandungen 16, 17, 18, 19, 20, 21, 22 exemplarisch ersichtlich, dass die Wandungen 16, 17, 18, 19, 20, 21, 22 fachwerkträgerartig die Außenwandung 4 gegen radiale Schnittkräfte abstützen, indem sich die Wandungen 16, 17, 18, 19, 20, 21, 22 paarweise schneiden.

In Fig. 3 ist ferner besonders gut ersichtlich, dass die Kühlkanalöffnungen 11 mit in der Außenwandung 4 abschnittsweise verlaufenden Kühlkanälen 33 fluidkommunizierend verbunden sind. Die Kühlkanäle 33 zweigen dabei von dem Hohlraum 34, über welchen das Kühlmittel in die Kühlkanäle 33 strömt ab.

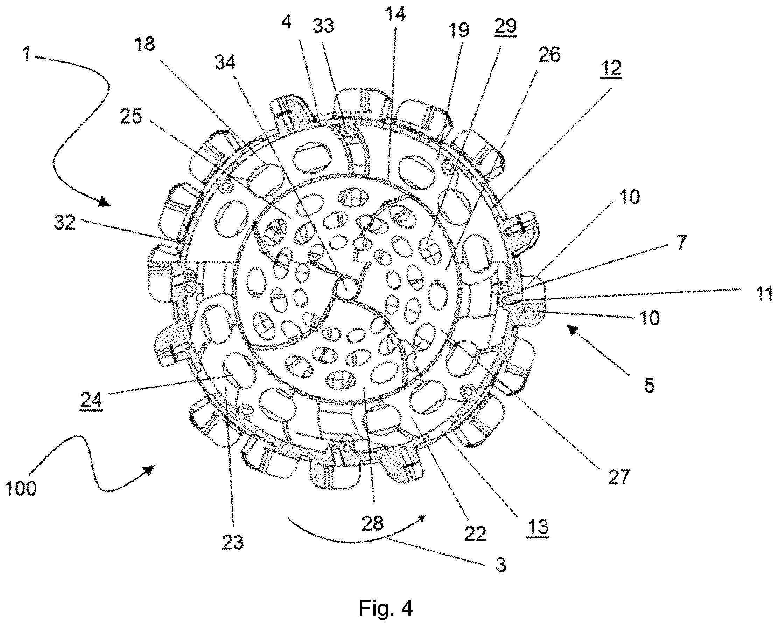

Fig. 4 zeigt eine schematische Schnittdarstellung des Aufbohrwerkzeugs 1 im Bereich des Grundkörpers 100 nach Fig. 1 gemäß der Schnittlinie IV aus Fig. 2. Aus Fig. 4 ist ersichtlich, dass die gegenläufig orientierten Wandungen 18 und 19 sich gegenseitig schneiden, so dass dadurch eine radiale Abstützung der Auswandung 4 im Bereich der Kassettensitze 5 gebildet wird.

Fig. 5 zeigt das Aufbohrwerkzeug 1 bzw. den Grundkörper 100 mit in den Kassettensitzen 5 befestigten Schneidelementen 200 sowie mit in den Kassettensitzen 50 befestigten Führungsleistenelementen 300.

In Fig. 6 ist ersichtlich, dass die Schneidelemente 200 aus einer Kassette 210 und einer plattenförmigen Diamantschneide 220, welche aus einem polykristallinen Diamantmaterial besteht, aufgebaut sind. Die Diamantschneide 220 ist an die Kassette 210 gelötet, so dass die Diamantschneide 220 radial orientiert ist. Die Kassette 210 ist über eine Befestigungsschraube 230, welche mit dem Gewinde der Öffnung 6 in Eingriff steht, radial und über eine Befestigungsschraube 240, welche mit den Gewinde der Öffnung 10 in Eingriff steht, tangential mit dem Kassettensitz 50 und damit mit der Außenwandung 4 reversibel lösbar, also durch Festziehen bzw. Lösen der Befestigungsschrauben 230 und 240, verbunden; die Befestigungsschraube 240 ist in Fig. 5 ersichtlich.

In Fig. 6 ist ersichtlich, dass die Kassette 210 eine Kühlmittelaustrittsöffnung 250 aufweist, welche mit der Kühlkanalöffnung 11 fluidkommunizierend verbunden ist, so dass das Kühlmittel aus einem der Kühlkanäle 33 über die Kühlkanalöffnung 11 und sodann durch die Kassette 210 aus der Kühlmittelaustrittsöffnung 250 in Richtung der Diamantschneide 220 zur Kühlung dieser austritt.

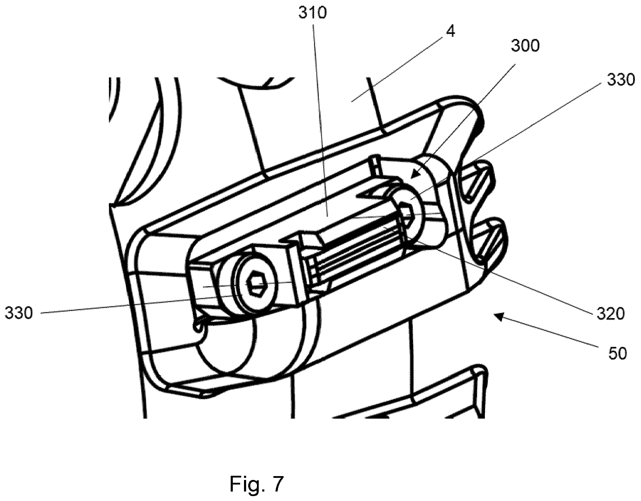

In Fig. 7 ist ersichtlich, dass die Führungsleistenelemente 300 aus einer Kassette 310 und einer Führungsleiste 320 aufgebaut sind. Die Führungsleiste 320 ist an die Kassette 310 gelötet, so dass die Führungsleiste 320 radial zur Führung des Aufbohrwerkzeugs 1 orientiert ist. Die Kassette 310 ist über zwei Befestigungsschrauben 330, welche jeweils mit dem Gewinde der entsprechenden Öffnungen 51 in Eingriff stehen, radial mit dem Kassettensitz 300 und damit mit der Außenwandung 4 reversibel lösbar, also durch Festziehen bzw. Lösen der Befestigungsschrauben 330, verbunden. Die Führungsleiste 320 besteht dabei aus einem polykristallinen Diamantmaterial. Denkbar und auch möglich ist, dass die Führungsleiste 320 aus einem Hartmetall (*cemented carbide*) im Sinne der vorliegenden Offenbarung besteht.

In der Kassette 310 kann analog zu der Kassette 210 eine Kühlmittelaustrittsöffnung vorgesehen sein, welche mit einer Kühlkanalöffnung der Außenwandung 4 fluidkommunizierend verbunden ist, so dass das Kühlmittel aus einem der Kühlkanäle 33 über diese Kühlkanalöffnung und sodann durch die Kassette 310 aus der Kühlmittelaustrittsöffnung in Richtung der Führungsleiste 320 zur Kühlung dieser austritt.

Die Fig. 1 bis 7 offenbaren damit ein Aufbohrwerkzeug 1 sowie einen Grundkörper 100 des Aufbohrwerkzeugs 1, wobei im Bereich des Grundkörpers 100 in dem Innenraum 4a durch die Wandungen 14, 16, 17, 18, 19, 20, 21, 22, 23, 25, 26, 27, 28 und 29 eine materialnahlose monolithische Stabilisierungsstruktur generativ hergestellt ist, durch welche eine Verformung der Außenwandung 4 im Falle radialer und tangentialer Schnittkräfte im Bereich der Kassettensitze 5 stabilisiert ist und zugleich durch die offenbarte Form der Wandungen 14, 16, 17, 18, 19, 20, 21, 22, 23, 25, 26, 27, 28 und 29 Gewicht gespart wird, so dass beim Aufbohren mit dem Aufbohrwerkzeug 1 Kippmomente quer zur Längsachse 2 und Spindelbelastungen reduziert sind. Die Außenwandung 4 ist dabei materialnahtlos monolithisch durch die Wandungen 14, 16, 17, 18, 19, 20, 21, 22, 23, 25, 26, 27, 28 und 29 mit sich selbst verbunden.

## Patentansprüche

1. Aufbohrwerkzeug (1) zur zumindest abschnittsweisen Aufweitung einer Ausnehmung eines metallischen Werkstücks durch eine Drehung um eine Längsachse (2) in einem vorgegebenen Bearbeitungsdrehsinn (3), umfassend eine ein- oder mehrteilige Außenwandung (4) und mehrere in einer ein- oder mehrteiligen Aufnahmestruktur (5) der Außenwandung (4) angeordnete Schneidelemente (200), **dadurch gekennzeichnet, dass** eine Stabilisierungsstruktur (14, 16, 17, 18, 19, 20, 21, 22, 23, 25, 26, 27, 28) zur Hemmung einer Verformung der Außenwandung (4) derart ausgebildet ist, dass ein von der Außenwandung (4) zumindest abschnittsweise umfänglich umgebenes Kernstrukturelement (14, 25, 26, 27, 28) der Stabilisierungsstruktur (14, 16, 17, 18, 19, 20, 21, 22, 23, 25, 26, 27, 28) von der Außenwandung (4) beabstandet ist, in einem zwischen dem Kernstrukturelement (14, 25, 26, 27, 28) und der Außenwandung (4) gebildeten Zwischenraum (4b) eine Verbindungsstruktur (16, 17, 18, 19, 20, 21, 22, 23) der Stabilisierungsstruktur (14, 16, 17, 18, 19, 20, 21, 22, 23, 25, 26, 27, 28) ausgebildet ist, der Zwischenraum (4b) durch die Verbindungsstruktur (16, 17, 18, 19, 20, 21, 22, 23) in einen stabilisierungsfreien Bereich und einen stabilisierungsstrukturhaltigen Bereich (16, 17, 18, 19, 20, 21, 22, 23) unterteilt ist und die Verbindungsstruktur (16, 17, 18, 19, 20, 21, 22, 23) mit der Außenwandung (4) und dem Kernstrukturelement (14, 25, 26, 27, 28) jeweils materialnahtlos monolithisch verbunden ist.

2. Aufbohrwerkzeug (1) nach Anspruch 1, **dadurch gekennzeichnet, dass** die Verbindungsstruktur (16, 17, 18, 19, 20, 21, 22, 23) eine ein- oder mehrteilige erste Verbindungswandung (17, 19, 21, 23) aufweist und die erste Verbindungswandung (17, 19, 21, 23) mit dem Kernstrukturelement (14, 25, 26, 27, 28) und der Außenwandung (4) jeweils materialnahtlos monolithisch verbunden ist.

3. Aufbohrwerkzeug (1) nach einem der vorhergehenden Ansprüche,
**dadurch gekennzeichnet, dass** die erste Verbindungswandung (17, 19, 21, 23) entlang einer ersten Schraubenlinie mit einer der Längsachse (2) entsprechenden Schraubenachse erstreckend ausgeformt ist.

4. Aufbohrwerkzeug (1) nach einem der vorhergehenden Ansprüche,
**dadurch gekennzeichnet, dass** die erste Schraubenlinie dem Bearbeitungsdrehsinn (3) entgegengesetzt gewunden ist.

5. Aufbohrwerkzeug (1) nach einem der vorhergehenden Ansprüche,
**dadurch gekennzeichnet, dass** dieVerbindungsstruktur (16, 17, 18, 19, 20, 21, 22, 23) eine der ersten Verbindungswandung (17, 19, 21, 23) verschiedene ein- oder mehrteilige zweite Verbindungswandung (16, 18, 20, 22)aufweist und die zweite Verbindungswandung (16, 18, 20, 22) mit dem Kernstrukturelement (14, 25, 26, 27, 28) und der Außenwandung (4) jeweils materialnahtlos monolithisch verbunden ist.

6. Aufbohrwerkzeug (1) nach einem der vorhergehenden Ansprüche,
**dadurch gekennzeichnet, dass** diezweite Verbindungswandung (16, 18, 20, 22) entlang einer zweiten Schraubenlinie mit einer der Längsachse (2) entsprechenden Schraubenachse erstreckend ausgeformt ist.

7. Aufbohrwerkzeug (1) nach einem der vorhergehenden Ansprüche,
**dadurch gekennzeichnet, dass** die zweite Schraubenlinie im Bearbeitungsdrehsinn (3) gewunden ist.

8. Aufbohrwerkzeug (1) nach einem der vorhergehenden Ansprüche,
**dadurch gekennzeichnet, dass** das Kernstrukturelement (14, 25, 26, 27, 28) eine einen Innenraum (4c) des Aufbohrwerkzeugs (1) zumindest abschnittsweise umfänglich umgebend ausgeformte Kernwandung (14) aufweist.

9. Aufbohrwerkzeug (1) nach einem der vorhergehenden Ansprüche,
**dadurch gekennzeichnet, dass** die Stabilisierungsstruktur (14, 16, 17, 18, 19, 20, 21, 22, 23, 25, 26, 27, 28) eine ein- oder mehrteilige Kernwandungsverbindungswandung (25, 26, 27, 28) aufweist und die Kernwandung (14) durch die Kernwandungsverbindungswandung (25, 26, 27, 28) mit sich selbst materialnahtlos monolithisch verbunden ist.

10. Aufbohrwerkzeug (1) nach einem der vorhergehenden Ansprüche,
**dadurch gekennzeichnet, dass** die Kernwandungsverbindungswandung (25, 26, 27, 28) entlang einer dritten Schraubenlinie mit einer der Längsachse (2) entsprechenden Schraubenachse erstreckend ausgeformt ist.

11. Aufbohrwerkzeug (1) nach einem der vorhergehenden Ansprüche,
**dadurch gekennzeichnet, dass** die dritte Schraubenlinie im Bearbeitungsdrehsinn (3) gewunden ist.

12. Aufbohrwerkzeug (1) nach einem der vorhergehenden Ansprüche,
**dadurch gekennzeichnet, dass** der ersten Schraubenlinie, der zweiten Schraubenlinie oder der dritten Schraubenlinie eine tatsächliche oder hypothetische Umrundung der Längsachse (2) zuordenbar ist, durch die Umrundung eine tatsächliche bzw. hypothetische Erstreckung der ersten, zweiten bzw. dritten Schraubenlinie parallel zur Längsachse (2) definiert ist und ein Funktionswert einer Arcuskosinusfunktion mit einem durch das Verhältnis der Erstreckung zu der Umrundung gebildeten Argument größer oder gleich 15° und kleiner oder gleich 45° ist.

13. Aufbohrwerkzeug (1) nach einem der vorhergehenden Ansprüche,
**dadurch gekennzeichnet, dass** durch die erste Schraubenlinie und die zweite Schraubenlinie mindestens ein gemeinsamer Schnittpunkt auf einer der Stabilisierungsstruktur (14, 16, 17, 18, 19, 20, 21, 22, 23, 25, 26, 27, 28) zugewandten Innenoberfläche der Außenwandung (4) definiert ist und eine Umfangsposition und eine Längsachsenposition (2) eines der Schneidelemente (200) durch den Schnittpunkt definiert ist.

14. Aufbohrwerkzeug (1) nach einem der vorhergehenden Ansprüche,
**dadurch gekennzeichnet, dass** die Außenwandung (4) oder die Stabilisierungsstruktur (14, 16, 17, 18, 19, 20, 21, 22, 23, 25, 26, 27, 28) mindestens eine Ausnehmung (12, 13) mit einem ersten konkaven Abschnitt und einem dem ersten konkaven Abschnitt gegenüberliegend angeordneten zweiten konkaven Abschnitt derart aufweist, dass ein Krümmungsradius des ersten konkaven Abschnitts einem Krümmungsradius des zweiten konkaven Abschnitts verschieden ist.

15. Aufbohrwerkzeug (1) nach einem der vorhergehenden Ansprüche,
**dadurch gekennzeichne**t, **dass** mindestens eines der Schneidelemente (200) durch ein mechanisches Befestigungselement (230, 240) reversibel lösbar mit der Aufnahmestruktur (5) verbunden ist.

16. Aufbohrwerkzeug (1) nach einem der vorhergehenden Ansprüche,
**dadurch gekennzeichnet, dass** die Außenwandung (4) und/oder die Innenwandung (14) entlang der Längsachse (2) zumindest abschnittsweise rohrförmig ausgebildet ist bzw. sind.

17. Aufbohrwerkzeug (1) nach einem der vorhergehenden Ansprüche,
**dadurch gekennzeichnet, dass** durch die Außenwandung (4) ein um die Längsachse (2) umlaufend geschlossener materialnahtloser monolithischer Materialpfad gebildet ist.

18. Aufbohrwerkzeug (1) nach einem der vorhergehenden Ansprüche,
**dadurch gekennzeichnet, dass** mindestens zwei der Schneidelemente (200) an verschiedenen Längsachsenpositionen (2) angeordnet sind.

19. Aufbohrwerkzeug (1) nach einem der vorhergehenden Ansprüche,
**dadurch gekennzeichnet, dass** eine Anordnungsschraubenlinie der ersten Schraubenlinie entsprechend um die Außenwandung (4) gewunden ist und mindestens zwei der Schneidelemente (200) entlang der Anordnungsschraubenlinie angeordnet sind.

20. Aufbohrwerkzeug (1) nach einem der vorhergehenden Ansprüche,
**dadurch gekennzeichnet, dass** mindestens eines der Schneidelemente (200) eine Schneide (220) aus einem polykristallinen Diamantmaterial und ein mit der Schneide (220) stoffschlüssig verbundenes Schneidenträgerelement (210) umfasst.

21. Aufbohrwerkzeug (1) nach einem der vorhergehenden Ansprüche,
**dadurch gekennzeichnet, dass** für mindestens eines der Schneidelemente (200) eine Kühlmittelkanalstruktur (11, 33, 34) in der Stabilisierungsstruktur (14, 16, 17, 18, 19, 20, 21, 22, 23, 25, 26, 27, 28) und der Außenwandung (4) zur Kühlmittelversorgung der Schneidelemente (200) materialnahtlos monolithisch ausgebildet ist.

22. Aufbohrwerkzeug (1) nach einem der vorhergehenden Ansprüche,
**dadurch gekennzeichne**t, **dass** die Verbindungsstruktur (16, 17, 18, 19, 20, 21, 22, 23) mit der Außenwandung (4) und dem Kernstrukturelement (14, 25, 26, 27, 28) dadurch jeweils materialnahtlos monolithisch verbunden ist, dass ein Pulvermaterial selektiv aufgeschmolzen und anschließend erstarrt wird.

23. Aufbohrwerkzeug (1) nach einem der vorhergehenden Ansprüche,
**dadurch gekennzeichnet, dass** der stabilisierungsstrukturfreie Bereich zumindest bereichsweise mit einem Dämpfungsmaterial zur Dämpfung einer Schwingung der Außenwandung (4) gefüllt ist und das Dämpfungsmaterial mit der Außenwandung (4) und der Verbindungsstruktur (16, 17, 18, 19, 20, 21, 22, 23) verbunden ist.
